# EUROPEAN PATENT APPLICATION

(11) **EP 3 293 050 A1**
(43) Date of publication of application: **14.03.2018**
(21) Application number: 16382422.0
(22) Date of filing: 13.09.2016
(51) Int. Cl.: B60Q 1/44, B60Q 1/30, B60Q 1/26

(54) **SYSTEM FOR SIGNALLING BRAKING**

(71) Applicant: Romera Ortiz, Juan, 08917 Badalona (ES)
(72) Inventor: Romera Ortiz, Juan, 08917 Badalona (ES)

(57) **Abstract**

Braking signalling system. This is a signalling system by which a sensor (2) that detects vehicle deceleration activates a light unit (4) when vehicle deceleration is detected. It is designed as a safety system to warn other drivers that the vehicle is braking. This device works without needing to be physically connected by cable or a wireless signal to any other signalling system built into the vehicle. The device is designed for users of two-wheeled vehicles such as motorcycles, bicycles, etc. As well as in other unbodied vehicles such as quads, etc. It is designed to be built in or attached by a securing system in a visible location, such as a helmet, jacket, backpack, etc.

## Description

### 1. TITLE OF THE INVENTION:

### System for signalling braking

### TECHNICAL FIELD

The invention is in the technical field of Transport, in the subsector of unbodied vehicles, as a passive safety element. Device for signalling braking

### BACKGROUND OF THE INVENTION

This invention refers to a device for signalling braking in unbodied vehicles such as motorcycles, bicycles, quads etc., which is characterised by the fact that it works in a totally independent manner. Not needing to be connected, either physically or by wireless signals, to the vehicle. It comprises a sensor that detects deceleration, an electronic assembly that interprets the signals emitted by the sensor, processes them and sends a signal to a light unit that will illuminate when the vehicle decelerates, the device is powered by batteries. It is also possible for the sensor, in addition to detecting deceleration, to work as a switch that is normally open but closes when the vehicle brakes, in this case the electronic assembly is not necessary. The invention is designed to be attached to a visible location, such as a helmet, a jacket, a backpack, etc.

Several braking warning devices or unbodied vehicles such as motorcycles, bicycles, quads currently exist. All of them either require a physical connection to the vehicle, or they work using wireless signals.

A "Optical braking signalling device for motorcycles" Patent P9901131. In this case, the invention comprises a transmitter fitted to the motorcycle and physically connected to the vehicle's brake light, as well as a receiver, therefore it needs to transmit wireless signals.

A Patent "System for replacing a plurality of visual and/or acoustic signal in means of transport and locomotion" WO9912769. Like the one above, its operation depends on wireless transmitter-receiver connection.

A Patent "Lighting device for signalling, in particular for motorcycle helmets" EP091312. Like the previous case, needs a wireless connection between the transmitter and the receiver and it is designed only for use on a motorcycle helmet.

A Finally, patent "Motorcycle safety helmet system" US5704707 also uses wireless transmitter-receiver technology, and it is also designed only for use on a motorcycle helmet.

### Category of the aforementioned documents

A: Reflects the state of the art
X: Particularly relevant
Y: Particularly relevant combined with others of the same category
O: Referring to non-written communication
P: Published between the priority date and the presentation of the application.

### DESCRIPTION OF THE INVENTION

In the current state of the art, apart from the braking signalling system built into the vehicle, several braking warning devices for unbodied vehicles are known, especially for motorcycles. All of them need to be physically connected to the vehicle, normally by means of cables. Or by wireless signals, with a transmitter and a receiver between the device and the vehicle.

Braking signalling system. This is a signalling system by which a sensor that detects the vehicle's deceleration causes a light unit to come on when deceleration of the vehicle is detected, this is designed as a safety system to warning drivers behind that the vehicle is slowing down. This device does not need to be physically connected by a cable or a wireless signal to the signalling system built into the vehicle. The device is designed to be used on two-wheeled vehicles: motorcycles, bicycles, etc. As well as other unbodied vehicles such as quads, tractors etc. It has been designed to be attached to a location easily visible by others, such as a helmet, jacket, backpack, etc. It comprises a sensor (2) that can detect vehicle deceleration. An electronic assembly (1) to interpret the signals sent by the sensor (2) and to send a signal that turns on the light unit (4) which will illuminate when the vehicle is decelerating. The energy needed by this device is supplied by batteries (3). The electronic components are protected from the elements in a sealed box (4).
It is also possible for the sensor (2), in addition to detecting deceleration, to work as a switch, which is normally open but closes when the vehicle decelerates. In this case the electronic assembly is not necessary (1).

### BRIEF DESCRIPTION OF THE DRAWINGS

'To complement this description, and for better understanding of the features of the invention, it is accompanied by a collection of drawings, which describe but are not limited to the following:

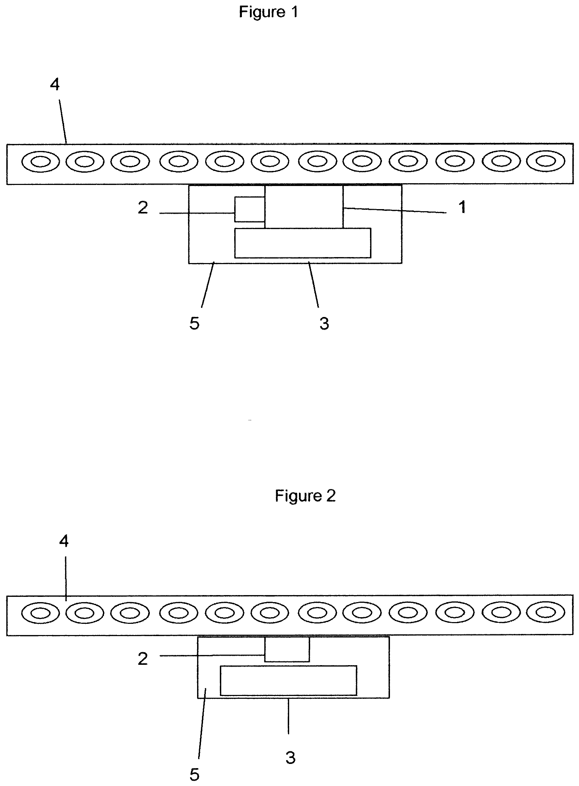

Figure 1.- Shows a view of the invention.
Figure 2.- Shows a view of the invention where the sensor also works as a switch and thus does not need the electronic board.

### PREFERRED EMBODIMENT OF THE INVENTION

### Braking signalling system

Comprised of a sensor (2) that can detect deceleration in the vehicle being used. An electronic assembly (1) that interprets the signals sent by the sensor (2) and sends a signal to turn on the light unit (4) which will illuminate when the vehicle decelerates. The energy needed by the device is supplied by batteries (3). The electronic components are protected from the elements in a sealed box (4).
It is also possible for the sensor (2), in addition to detecting deceleration, to work as a switch which is normally open but closes when the vehicle decelerates and turns on the light unit (4). In which case the electronic assembly is not necessary (1).

This invention uses a strip of LED lamps (4), an accelerometer as a deceleration sensor (2). An open-code programmable electronic board (1), used as a control board. The power needed is supplied by batteries (3) and it is protected inside a sealed box (5).
Achieving a satisfactory result. Tested attached to a helmet, the device lights up when there is deceleration.
As a second option, we use encapsulated balls as a deceleration sensor (2), connected to a strip of LED lamps (4), and powered by a battery (3), the sensor and the battery are protected in a sealed box (5). Achieving a satisfactory result.

## Claims

1. -Comprising a sensor (2) that detects deceleration in the vehicle being used. An electronic assembly (1) that interprets the signals sent by the sensor (2) and sends a signal to turn on the light unit (4) which will illuminate when the vehicle decelerates. The energy needed by the device is supplied by batteries (3). The electronic components are protected from the elements in a sealed box (4). It is also possible for the sensor (2) in addition to detecting deceleration, to work as a switch, which is normally open but closes when the vehicle decelerates and turns on the lights (4). In which case the electronic assembly is not necessary (1).
The system does not need to be physically or wirelessly connected to any signalling system built into the vehicle. The device is designed for users of two-wheeled vehicles such as motorcycles, bicycles, etc. As well as other unbodied vehicles such as quads, tractors etc. The system can be built into the support (helmet, jacket, backpack, etc.) or attached by an adhesive system.

2. Braking signalling system according to claim 1. **Characterised by** the fact that it can be installed by means of adhesive, onto a part visible by other people, which could be a helmet, jacket, backpack, etc.

3. Braking signalling system according to claim 1. **Characterised by** the fact that it is a system that is independent from the others installed on the vehicle, not needing to be either physically or wirelessly connected to other mechanism of the vehicle.

4. Braking signalling system according to claim 1. **Characterised by** the fact that the electronic parts are protected from the elements in a sealed box.

5. Braking signalling system according to claim 1. **Characterised by** the fact that it is also possible for the sensor (2) in addition to detecting deceleration, can work as a switch which is normally open, but closes when the vehicle brakes, activating the light unit (4).

6. Braking signalling system according to claim 1. **Characterised by** the fact that it can be built into the support (helmet, backpack, jacket, etc.).

## Amended claims

### Amended claims in accordance with Rule 137(2) EPC.

1. It is a brake-signalling device for bicycles, consisting of
Two position switched fitted in series, one in a vertical position (4) and the other in a horizontal position (2) in relation to the ground, the bicycle also being in a horizontal position. Lighting equipment (3) which lights up when the position switch (2) closes its contacts due to the inertia from the deceleration of the bicycle. Batteries (1) responsible for providing the necessary energy for the equipment to work.

2. The device of claim 1.- in which the position switches can contain mercury-free or electronic balls.

3. The device of claim 1.- This device is designed to be installed independently on the bicycle or it can also be integrated into another signalling device already available in the bicycle market, providing it with added value.
